(19)

**Europäisches Patentamt**

**European Patent Office**

**Office européen des brevets**

(11) **EP 4 712 402 A1**

(12) **EUROPEAN PATENT APPLICATION**

(43) Date of publication:
**18.03.2026 Bulletin 2026/12**

(21) Application number: **24200572.6**

(22) Date of filing: **16.09.2024**

(51) International Patent Classification (IPC):
***H04L 9/00*** *(2022.01)*

(52) Cooperative Patent Classification (CPC):
**H04L 9/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Katholieke Universiteit Leuven KU Leuven Research & Development 3000 Leuven (BE)**

(72) Inventors:
• **D´Anvers, Jan-Pieter 3000 Leuven (BE)**
• **Legiest, Wouter 9000 Gent (BE)**

(74) Representative: **Winger Mouterij 16 bus 101 3190 Boortmeerbeek (BE)**

(54) **METHOD FOR EDIT DISTANCE CALCULATION IN A CRYPTOGRAPHIC APPLICATION**

(57) The present invention relates to a method for performing an equality checking of a first character and a second character in a cryptographic application wherein programmable bootstrapping is used, at least one of said first and said second character being encrypted, the method comprising:

o checking the equality of the first character with the second character by determining a difference between said characters, and

o using the difference as input for a lookup table operation through a programmable bootstrap operation, said lookup table yielding a first predetermined value if the difference equals zero and a second predetermined value different from the first predetermined value, so obtaining an equality result for the pair of characters formed by the first and the second character.

**Fig.2**

**Description**

**Field of the invention**

The present invention is generally related to the field of cryptography.

**Background of the invention**

In a context like, e.g., cloud computing users run a certain risk when uploading raw data to untrusted cloud servers. Therefore, it is required that sufficient security be provided to protect the users' data. A promising new technology that has emerged in the field of data security is Fully Homomorphic Encryption (FHE), which allows performing computations on encrypted data (ciphertext) without learning further information about that data. In other words, it is not required to first decrypt the data. Informally, FHE is an encryption scheme that enables a data owner to securely outsource computation on the data to an untrusted processing party, whereby the processing party computes over encrypted data and stays oblivious of the data and the computed result. The utility of FHE comes at a performance price, which can sometimes be prohibitive for time-critical applications. However, the recent advances in software and hardware implementation of the underlying FHE algorithms show promising performance results, encouraging the practitioners to start including FHE in production.

In a context of financial transactions, for example, there are initiatives at European level to make payments in Euro instant, whereby an obligation is imposed on payment providers to verify the match between the bank account number and the name of the beneficiary provided by the payer, as well as to alert the payer of possible mistakes or suspected fraud before the payment is made. In such applications, string similarity calculations are ubiquitous to provide robustness against spelling errors. Another application field where string similarity calculations may occur is the field of genomics, where sequencing data strings are to be compared. One example of a string similarity calculation is the edit distance, which calculates the minimum number of edits between two given strings.

In this context FHE can be an important enabler. Instead of physically sharing their customer information, parties can compute the desired outcome of the matching operation avoiding data sharing in clear altogether. The institution sending the payment would encrypt the transaction data using a suitable FHE scheme, send it to a third party which would compute the desired matching score against an encrypted version of the customer data, and return the encrypted score. The result is then decrypted and only used by the payer institution. In the process, according to the principles of FHE, the third party provably does not learn anything about the transaction data, and the institution sending the payment does not learn anything about the customers of the institution receiving the payment.

In the paper 'Homomorphic Computation of Edit Distance' (Cheon et al., Financial Cryptography Workshops, vol.8976 of Lecture Notes in Computer Science, pp.194-212, 2015) a edit distance algorithm is provided in the context of somewhat homomorphic encryption. Both compare and min functions are developed and used to build up edit distance calculation. Other researchers have proposed an approximation of the edit distance for genome analysis for fully homomorphic encryption. All these techniques are based on second generation FHE schemes and are built around arithmetic ciphertexts.

One of the main challenges in practical applications of FHE is its computational overhead. As one of the costliest operations of the FHE scheme is the polynomial multiplication, speeding up the multiplication operation may substantially contribute to a reduction of the computational overhead. In the TFHE scheme described in the paper "TFHE: Fast Fully Homomorphic Encryption Over the Torus" (I. Chillotti et al., J.Cryptol. 33, 34-91, 2020) Toom-Cook multiplication, Karatsuba multiplication or the Fast Fourier Transform (FFT) can be used for fast polynomial multiplication, where typically FFT is the fastest option. TFHE enables the use of homomorphic Boolean algebra, e.g., NAND, XOR and XNOR logic gates.

In TFHE, a ciphertext usually contains 2 to 5 bits of plaintext. With this plaintext, one can perform linear operations such as addition, subtraction, and multiplication with a small unencrypted value at a relatively low cost. However, these operations introduce a certain amount of noise into the ciphertext required for security. FHE is tolerant to this noise as long as a certain threshold level of the noise is not exceeded. Therefore, after a certain number of operations, it is necessary to perform a noise reduction procedure called bootstrapping, so that the noise remains below the threshold noise level and further computations can be carried out. Such a bootstrapping operation is much more costly than linear operations. Bootstrapping resets the noise, allowing further computations. In a TFHE scheme a bootstrapping operation is invoked after every homomorphic non-linear gate. The bootstrapping operation is preferably kept short in TFHE schemes.

One key advantage of TFHE is that during this bootstrapping operation, one can apply any function, in the form of a look up table (LUT), to the ciphertext by changing an initial value (without any additional cost). This procedure, known as programmable bootstrapping (PBS), enables the execution of highly non-linear functions on encrypted data. Table 1 shows an example of a LUT for a function $f(x) = x - 4$ in a 5 bit plaintext space.

Table 1

| x | Output | x | Output | x | Output | x | Output |
|---|---|---|---|---|---|---|---|
| 0 (0 0000) | 12 | 8 (0 1000) | 4 | 16 (**1** 0000) | 4 | 24 (**1** 1000) | 12 |
| 1 (0 0001) | 13 | 9 (0 1001) | 5 | 17 (**1** 0001) | 3 | 25 (**1** 1001) | 11 |
| 2 (0 0010) | 14 | 10 (0 1010) | 6 | 18 (**1** 0010) | 2 | 26 (**1** 1010) | 10 |
| 3 (0 0011) | 15 | 11 (0 1011) | 7 | 19 (**1** 0011) | 1 | 27 (**1** 1011) | 9 |
| 4 (0 0100) | 0 | 12 (01100) | 8 | 20 (**1** 0100) | 0 | 28 (**1** 1100) | 8 |
| 5 (0 0101) | 1 | 13 (0 1101) | 9 | 21 (**1** 0101) | 15 | 29 (**1** 1101) | 7 |
| 6 (0 0110) | 2 | 14 (0 1110) | 10 | 22 (**1** 0110) | 11 | 30 (**1** 1110) | 6 |
| 7 (0 0111) | 3 | 15 (01111) | 11 | 23 (**1** 0111) | 13 | 31 (**1** 1111) | 5 |

As an illustration, consider an equality checking between two 2-bit encrypted messages, x and y, both encrypted in a 5-bit plaintext space. This checking is typically performed by first computing $x + (y << 2)$ (or, equally, $x + y \cdot 4$), resulting in a 4-bit value where the two least significant bits are x and the two most significant bits are y. Then, a bootstrap operation is performed with a lookup table that returns one if the first two bits of the input equal the last two bits.

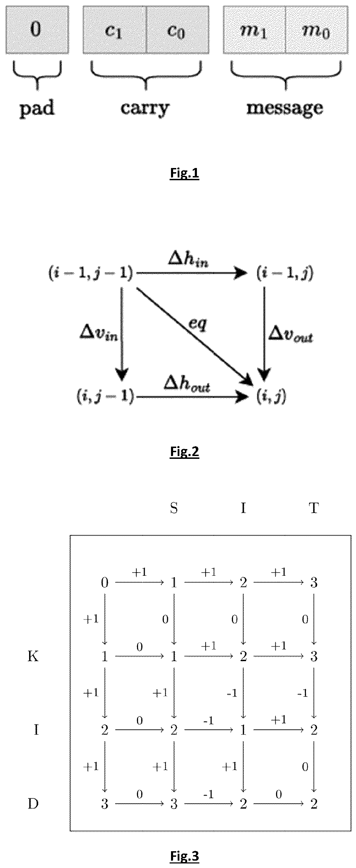

More in detail, the plaintext space is typically divided into one or more message bits (at the least significant bit positions of the plaintext space), optionally one or more carry bits (at the middle bits of the plaintext space) and a padding bit (which is the most significant bit of the plaintext space). Fig.1 illustrates the division into, in this particular and non-limiting example, two message bits, two carry bits and a padding bit. Typically, the message bits are the bits used to represent plaintext values after encryption or bootstrapping, while the carry bits are initially zero but will be filled after performing linear operations (e.g., the $x + (y << 2)$ operation as described above). The padding bit typically is kept at zero, as a non-zero padding bit complicates the application of a LUT during programmable bootstrapping. In some well-defined scenarios, it is possible to use the entire plaintext space without the message-carry division. However, the padding bit generally should remain zero to ensure proper LUT lookups during programmable bootstrapping. In more advanced scenarios, one can make abstraction of the plaintext and carry space and use the entire plaintext space without the message-carry division. However, in this scenario one should generally take care that the padding bit remains zero to ensure proper LUT lookups during the programmable bootstrapping.

In general, for any arbitrary function one can build the corresponding LUT in case the padding bit remains 0. In the specific case one wants to use a larger LUT, without adapting the parameters, specific behaviour must be taken into account. Due to the nature of TFHE calculations, when the padding bit is 1, the lookup result is the negative of the corresponding input with the padding bit 0. For example, if using a 5-bit plaintext space to evaluate function f through a LUT, and one wants to use the complete 5 bits, it must be considered that for $16 \leq x < 32$, the function will become $f(x) = -f(x - 16)$. This property is also known as a Negacyclic Lookup Table (NLUT) and is inherent in any current FHE scheme with PBS.

FHE schemes further suffer from a usability problem. Due to its confidential nature, data-dependent branching (e.g., if statements, while statements) cannot be used. To evaluate a branch in FHE, all possible outcomes must be calculated. This means that ideally programs need to be rewritten to avoid if statements, and if statements cannot be used to skip irrelevant parts of the execution.

Edit distance is a metric used to measure the similarity between two strings by calculating the number of operations needed to transform one string into the other. In that sense it differs from the Hamming distance, where only the similarity of corresponding characters is considered.

The edit distance exists in various variants where each variant allows a different set of operations: the operations 'insertion' and 'deletion' correspond to the addition or removal of a character. A third operation is 'substitution', which involves replacing one character with another. A fourth operation is 'transposition', where two adjacent characters swap places. The Levenshtein distance considers the first three operations.

The popular Levenshtein distance, is often interchangeably used with edit distance. These metrics are commonly encountered in applications like, e.g., fraud detection, DNA sequence comparison, calculating distances between matrix sequences, and in spell checkers.

The Levenshtein distance was originally obtained using a recursive definition. This definition was later converted to an executable algorithm known as the Wagner-Fisher algorithm. Since then, more efficient variations have been proposed, improving both time and space complexity.

The Wagner-Fisher algorithm uses dynamic programming to create a distance matrix (or 'D-matrix'). Where each element in the matrix represents the edit distance of the corresponding substrings up to that point in the matrix. For instance, $D[i, j] = ed(a1..i, b1..j)$ corresponds to the edit distance of the first i characters of string a and the first j characters of string b. Specifically, in the simple edit distance case, each value of the D-matrix is determined by the following equation:

EP 4 712 402 A1

$$D[i,j] = \begin{cases} D[i-1, j-1] & \text{if } a_i = b_j \\ 1 + \min(D[i-1,j], D[i,j-1], D[i-1,j-1]) & \text{otherwise.} \end{cases} \tag{1}$$

To calculate the next value, the algorithm uses three previously calculated values. This makes it difficult to parallelise. The original definition has a time and memory complexity of $O(n^2)$. A simple optimisation to reduce the space complexity to $O(n)$ can be achieved by only storing some of the columns of the D-matrix. Since its definition, many variations have been proposed to optimise the calculation, mostly relying on skipping parts of the calculations, based on the alphabet or data-dependent intermediate values. These optimisations can however not be ported to the FHE world as the value of intermediate variables is not known and thus no data-dependent optimisation can be performed.

Advanced edit distance algorithms are not always suitable for implementation in FHE due to their data-dependent assumptions or alphabet-specific data representations. Therefore, specific FHE-friendly optimisations are needed to further speed up the calculations of the edit distance.

**Summary of the invention**

It is an object of embodiments of the present invention to provide for an efficient method for checking the equality of two characters in a cryptographic application. It is a further object of the invention to provide for an improved method for calculating an edit distance between two strings of characters in a programmable bootstrapping operation of a cryptographic application.

The above objective is accomplished by the solution according to the present invention.

In a first aspect the invention relates to a method for equality checking of a first character and a second character in a cryptographic application wherein programmable bootstrapping is used, at least one of said first and said second character being encrypted and, hence, is found in the encrypted domain. The method comprises:

- Checking equality of the first character with the second character by determining a difference between said characters in the encrypted domain, and
- using the difference as input for a lookup table operation through a programmable bootstrap operation, said lookup table yielding a first predetermined value if the difference equals zero and a second predetermined value different from the first predetermined value, so obtaining an equality result for the pair of characters formed by the first and the second character.

The proposed solution allows obtaining an indication of whether the two characters are equal or not. As opposed to prior art solutions, the proposed method comprises a step of checking whether the two characters are equal by determining a difference between the two characters. This checking is performed in the encrypted domain. As described more in detail later in this disclosure, this way of equality checking is particularly suitable for use in cryptographic applications wherein programmable bootstrap operations are used. The method lends itself to being applied as an initial step in an edit distance calculation between two strings of characters in a cryptographic application wherein programmable bootstrapping is used.

In a preferred embodiment the first character and the second character are each represented as a plurality of chunks, and the equality checking is performed on a chunk-by-chunk basis whereby a lookup table result for a second or further chunk of the pluralities of chunks is determined based on a difference between corresponding current chunks and on a lookup table result for the preceding chunk. A lookup table result for the last chunk yields the eventual equality result for the pair of characters.

In advantageous embodiments the steps of checking and using the difference are repeated for a plurality of pairs of characters, with the first character in the pair belonging to a first string of characters and the second character in the pair to a second string of characters. In this way the equality of all characters of the strings can be checked.

Preferably the first string is encrypted and the second string is unencrypted, whereby for each character of the first string an equality result is precalculated for at least a subset of possible characters of the second string and the equality result is stored in a table. In some embodiments both the first and the second string are encrypted.

In one embodiment the output of the equality checking returns zero in case a logic zero is represented, and an integer value different from zero or one, in case a logic one is represented.

Advantageously, the cryptographic application is a torus fully homomorphic encryption scheme.

In a preferred embodiment the method as set out above is applied to check the equality of a character of the first string with a character of the second string as an initial step of a method for calculating an edit distance between the first string and the second string.

In some embodiments the edit distance is calculated using one or more programmable bootstrap operations and by performing in an iterative way intermediate edit distance calculations starting from an intermediate edit distance calculation for first and second substrings of the first and second string, respectively, thereby using in each iteration a corresponding result of said equality checking, and incrementing in each iteration the size of one or both of the first and second substring until the first and second substring equal the first and second string, respectively.

Advantageously, results of the intermediate edit distance calculations on the first and second substrings are stored in differential encoding values indicating a difference in edit distance between current first and second substrings and previous first and second substrings, at least one of which is shorter. After the last iteration at least a subset of differential encoding values are combined to obtain a resulting edit distance. The differential encoding values may each be stored in a single ciphertext in some embodiments.

In a preferred embodiment multiple of the differential encoding values for the first and second substring are calculated based on a shared result of the one or more programmable bootstrapping operations.

In another embodiment the one or more programmable bootstrapping operations apply a negacyclic lookup table on intermediate values computed at least partly based on the differential encoding values, said negacyclic lookup table being periodic with a given period, whereby in the second half of the given period of the lookup table values are attributed that are the negative of the values attributed in the first half of the given period.

In embodiments the differential encoding values for the first and second substring are calculated using in the one or more programmable bootstrapping operations a function that operates on a set of possible function input values, the size of said set exceeding half the size of the given period of the lookup table, by using the negacyclic lookup table to encode the function and ensuring that the values at the end of the range of function input values are the negative of the values at the start.

In another aspect the invention relates to a program executable on a programmable device containing instructions which, when executed, perform the method as previously described. In another aspect the invention relates to a computer-readable medium comprising instructions which, when executed by a computer, cause the computer to carry out the method as described above.

In one aspect the invention relates to a method for calculating an edit distance between a first string and a second string of characters in a cryptographic application wherein programmable bootstrapping is used to allow computations on encrypted data. The method comprises the steps of:

- performing an equality checking on characters of said first and said second string,
- performing in an iterative way intermediate edit distance calculations starting from an intermediate edit distance calculation for first and second substrings of said first and second string, respectively, thereby using in each iteration a corresponding result of said equality checking,
- incrementing in each iteration the size of one or both of said first and second substring until said first and second substring equal said first and second string, respectively.

In a preferred embodiment results of said intermediate edit distance calculations on said first and second substrings are stored in differential encoding values indicating a difference in edit distance between current first and second substrings and previous first and second substrings, of which at least one is shorter, and wherein after the last iteration at least a subset of differential encoding values are combined to obtain a resulting edit distance.

Advantageously, the differential encoding values are each stored in a single ciphertext.

In one embodiment the differential encoding values are calculated based on a result of one or more programmable bootstrapping operations whereby an outcome is obtained that is reused in the calculation of multiple of said differential encoding values.

In preferred embodiments the one or more programmable bootstrapping operations apply a negacyclic lookup table on intermediate values computed at least partly based on the differential encoding values, said negacyclic lookup table being periodic with a given period, whereby in the second half of that given period of the lookup table values are attributed that are the negative of the values attributed in the first half of the given period.

In embodiments the differential encoding values for the first and second substring are calculated using in the one or more programmable bootstrapping operations a function that operates on a set of possible function input values, the size of the set exceeding half the size of the given period of the lookup table, by using the negacyclic lookup table to encode the function and providing zero values in the function at the start and end of the domain used by the function input values.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

## Brief description of the drawings

The invention will now be described further, by way of example, with reference to the accompanying drawings, wherein like reference numerals refer to like elements in the various figures.

Fig.1 illustrates the division of the plaintext space into message bits, carry bits and a padding bit.
Fig.2 illustrates the input and output variables used in the edit distance calculation.
Fig.3 illustrates a simple example of an edit distance calculation.

## Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect the invention discloses a method for performing an equality check between two characters in a cryptographic application wherein programmable bootstrapping is used. At least one of the characters is encrypted, in some embodiments both characters may be encrypted. As will be shown later in this description, the proposed method for checking the equality of characters can advantageously be applied as an initial step in an approach to calculate an edit distance between two strings of characters. Performing an equality checking for a combination of a character of the first string (i.e. a letter of a first word) and a character of the second string (a letter of a second word) indeed forms a first phase in an edit distance calculation, which is then followed by performing an actual edit distance algorithm and a post-processing phase, as will be described in detail later in this description.

Before starting an equality check, a character representation of the input letters to be checked may be divided into multiple smaller chunks and corresponding chunks are next pairwise checked. This is a required step in case the character representation is larger than the size that can be handled in a single equality checking step. In the prior art solutions chunks of two message bits are used. This approach is for example also implemented in the TFHE-rs software library. As already mentioned in the background section, when checking the equality, for instance, a 2 bit encrypted message x with a 2 bit encrypted message y, one computes the key x+4 · y and then performs a PBS that maps the equality x == y to 1 and all other values to 0. Using the standard parameter size (2 bit plaintext, 2 bit carry), this method can only handle inputs of at most 2 bits. The following pseudocode represents the equality checking as implemented in the prior art:

$$
\begin{aligned}
&1\text{: } z \leftarrow x + 4 \cdot y \qquad\qquad\qquad\qquad \triangleright\ x \text{ and } y \text{ can each be max 2 bits} \\
&2\text{: } eq \leftarrow PBS(z, LUT_{eq}) \\
&3\text{: } \textbf{return } eq
\end{aligned}
$$

In the present invention, on the contrary, an approach is adopted wherein more than 2 plaintext bits can be handled at a time. An example is considered, wherein input letters are divided into chunks of 4 bits plaintext. To check the equality of the two 4 bit chunks x and y, a subtraction x-y is performed, resulting in a variable with a value between -15 and 15, and a value of 0 if and only if both chunks are the same. This results in more values than the normal 16-value PBS lookup. By choosing the following lookup table for the PBS:

$$
\mathrm{LUT}_{\mathrm{eq}} = \begin{cases} 1 & \text{if } (x - y) = 0 \\ 0 & \text{else,} \end{cases} \tag{2}
$$

one can have a 31-value lookup due to the negacyclic property of the lookup and the abundance of 0 values. The following pseudo-code reflects the proposed equality checking method.

$$
\begin{aligned}
&1\text{: } z \leftarrow x - y \qquad\qquad\qquad\qquad \triangleright\ x \text{ and } y \text{ can each be up to 4 bits} \\
&2\text{: } eq \leftarrow PBS(z, LUT_{eq}) \\
&3\text{: } \textbf{return } eq
\end{aligned}
$$

Hence, by applying a subtraction of the two chunks it becomes possible to handle chunks of more than 2 bits. For applications wherein characters (letters) are typical large integers each divided into ciphertexts containing two-bit chunks, two 2-bit checks in the above example can be combined into a single equality check by calculating $x = 4.x^{(2)} + x^{(1)}$ (where $x^{(1)}$ denotes the least significant part and $x^{(2)}$ the most significant) and similarly for y, thus halving the PBS cost. This also means that in this example the equality check for these larger inputs can be done at half of the PBS cost with the approach of this invention.

The invention is however not limited to the above example with 4-bit chunks. The same can readily be applied to chunks with a length different from 4 bits. The proposed method of performing an equality check based on a subtraction can be advantageous in particular when chunks are used of length 2 to 5 bits, which often occur in practical implementations. For bit sizes other than 4 one can still use the algorithm as described above, wherein first the two variables are subtracted and later the PBS is executed. In such case the LUT is smaller or larger depending on the bit size. More specifically, for a chunk size of b bits, one will have a lookup with $2^{b+1}-1$ relevant input values and returns 1 on input 0, and 0 on all other inputs. For example, for the case of 3 bits combined message and carry space, one first subtracts the two inputs, which has a value between -8 and 8. One then performs a programmable lookup operation where the lookup table returns 0 for any nonzero value of the subtracted variable and 1 for the value 0.

Characters with a larger representation are typically cut into smaller portions (chunks), e.g. symbols of 2 to 4 bits. A subcheck is then made for each pair of chunks, after which one has to combine the results of the subcheck into a final equality result. Efficient methods to perform such a way of checking are commonly known in the art. Although these methods of combining are efficient for large input symbols, a method is proposed in this invention that performs better for medium size inputs. More specifically, the method proposed here outperforms the state-of-the-art for 5 to 13 bit inputs, and is specifically interesting for ASCII input characters, which have a length of 7 bits. Hence, 7 bit input characters are assumed here and a 4 bit combined message and carry space. As explained above, such longer inputs are divided into chunks of a smaller size which can be handled in a single equality check using one programmable lookup operation.

A first step is to decide on the representation of the characters. The characters are encoded using a 4 bit and a 3 bit symbol, each encrypted in one ciphertext. Then the equality checking is performed between the 4 bit symbols $x_i^{(1)}$ and $y_i^{(1)}$ as explained previously. The result is a single bit $eq_{tmp}$ denoting equality, which is combined with the 3 bit symbols

$x_i^{(2)}$ and $y_i^{(2)}$ in the following way:

$$2 \cdot \left(x_i^{(2)} - y_i^{(2)}\right) + \left(1 - \mathrm{eq}_{tmp}\right) \tag{3}$$

The result of this linear computation is 0 if and only if both the 4 bit symbols and the 3 bit symbols are the same. Thus, one can perform the same PBS-lookup operation as before on this result to calculate the equality of the characters. The full algorithm is given below :

```
Require: Two ASCII encoded characters x and y
Require: x, y are split into 4 bit symbols (x^(1), y^(1)) and 3 bit symbols (x^(2), y^(2))
 1: z_0 ← x^(1) - y^(1)                                    ▷ first 4-bits of the character
 2: eq_tmp ← PBS(z_0; LUT_EQ)
 3: z_1 ← 2 · (x^(2) - y^(2)) + (1 - eq_tmp)               ▷ last 3-bits of the character
 4: eq ← PBS(z_1; LUT_EQ)
 5: return eq
```

As a result, an ASCII equality checking can be performed with two PBS, while other methods would need five lookups when using state-of-the-art 2 bit equality checking techniques or three lookups when using the 4 bit equality technique according to this invention.

The technique as described above can be easily generalised to other input sizes. For example, multiple symbols (chunks) can even be chained for characters that are over 8 bit large.

In the specific case that one of the strings is allowed to be unencrypted, the encrypted string can be encoded in a more optimal way. During a preprocessing phase, the equality of each character in the encrypted string can be checked with every possible character in the alphabet. This way, one can build up a bit vector for every alphabet character c which will denote if at a given index the encrypted string contains c. The results are then stored in a (encrypted) table and when the edit distance is calculated, the unencrypted data can be used to obtain the encrypted equality information. In the case where one already knows in advance that a certain character in the alphabet is not in the unencrypted string, one does not have to include this character in the preprocessing phase, saving some preprocessing cost.

For instance, if the word 'abbey' is the encrypted string and only encoding lower case letters, a $6 \times 26$ table would be stored:

| character | 1 | 2 | 3 | 4 | 5 |
|---|---|---|---|---|---|
| a | **enc(1)** | enc(0) | enc(0) | enc(0) | enc(0) |
| b | enc(0) | **enc(1)** | **enc(1)** | enc(0) | enc(0) |
| c | enc(0) | enc(0) | enc(0) | enc(0) | enc(0) |
| d | enc(0) | enc(0) | enc(0) | enc(0) | enc(0) |
| e | enc(0) | enc(0) | enc(0) | **enc(1)** | enc(0) |
| ... | ... | ... | ... | ... | ... |
| y | enc(0) | enc(0) | enc(0) | enc(0) | **enc(1)** |
| ... | ... | ... | ... | ... | ... |

This preprocessing has a cost of $O(|\Sigma| \cdot m)$, with m being the length of the encrypted string and $|\Sigma|$ the size of the alphabet. For example, a regular edit distance calculation would require O(m.n) equal operations. If thus $|\Sigma| < n$, this optimisation becomes beneficial.

The innovative approach as explained above is only one attractive option to perform equality checking. Other methods that can be used to check the equality of two characters are available in the literature. One option is to combine the two input characters x and y into one ciphertext using a linear combination x + c · y, where c is larger than the number of possible characters, and then performing a PBS that returns 1 on input (1+c) z for any integer z and that returns 0 on all other inputs. This method is used in some practical applications, but only allows half the possible input characters compared to the improved method presented above.

To check the equality of two characters with a larger representation, also other methods are available in the literature. One option is to perform a subcheck on chunks as described above, and then combining the results by adding them together. One can then check if the result of the addition equals the number of subchecks, which is true if and only if both symbols are the same. This can be achieved by using a PBS with a lookup table that returns 1 for input value equal to the number of subchecks, and 0 for other input values.

The edit distance algorithm proposed in the present invention builds further on the so-called Myers approach, wherein the Wagner-Fisher algorithm (see background section) is rewritten in terms of bits. The main difference is that differential values (or differences between adjacent horizontal and vertical cells) are stored in the D-matrix instead of absolute distances. In simple edit distance, i.e., when all operations have a uniform cost, each neighbouring value in the D-matrix can differ by at most one (see Eq.(1) above). In weighted edit distance cases, where the operation cost can take different values, the neighbouring values in the D-matrix are still typically close and thus the differential can be represented with a small variable. The Myers algorithm takes advantage of this feature by only representing the horizontal and vertical differences between neighbouring cells in the D-matrix. This allows the use of Boolean logic to compute the distance, making it possible to better utilize hardware parallelization, particularly in CPUs. From these horizontal and vertical differences, it is easy to reconstruct any value in the D-matrix by choosing a path from the start to the targeted cell and summing the horizontal and vertical differences along this path.

Focus is first on the simple edit distance case, where the neighbouring values in the D-matrix differ by at most one. The core of the algorithm is to store only the neighbour differences using ternary values {-1, 0, 1}, both in vertical and horizontal direction:

$$\Delta v[i, j] = D[i, j] - D[i - 1, j],$$
$$\Delta h[i, j] = D[i, j] - D[i, j - 1].$$

$$(4)$$

From these equations a more direct way can be derived to calculate the $\Delta v$ and $\Delta h$ values. Looking at a cell (i, j), $\Delta v_{out}$ and $\Delta h_{out}$ are defined as the values $\Delta v[i, j]$ and $\Delta h[i, j]$. These are the values to be computed in this cell. The above equations are then rewritten in terms of the equality $eq_{ij}$ between the two relevant characters $a_i$ and $b_j$ which, for simplicity, is shortened to eq when discussing in a single cell, as obtained from the equality checking described above and previous values of $\Delta v$ and $\Delta h$ which are denoted as $\Delta v_{in}$ and $\Delta h_{in}$. An overview of the input and output variables is given in Fig.2.

Equation (4) can be transformed to calculate the outputs $\Delta v_{out}$ and $\Delta h_{out}$ of a single D-matrix cell, in function of the inputs eq, $\Delta v_{in}$, $\Delta h_{in}$:

$$\Delta v_{out} = \min \begin{pmatrix} 1, \\ \Delta v_{in} + 1 - \Delta h_{in}, \\ 1 - eq - \Delta h_{in} \end{pmatrix}$$

$$\Delta h_{out} = \min \begin{pmatrix} 1, \\ 1 + \Delta h_{in} - \Delta v_{in}, \\ 1 - eq - \Delta v_{in} \end{pmatrix}$$

$$(5)$$

whereby the eq comprises the results of the equality checking. Building on this concept, the entire Wagner-Fischer algorithm can be transformed to use only Boolean operations and additions. For instance, they start with defining two Boolean values to represent the ternary nature of the delta elements. By leveraging a w-bit CPU architecture, the algorithm achieves a time complexity of $O(\lceil m/w \rceil n)$. However, the Myers algorithm does not translate well to a TFHE environment, where operations can be performed on multibit values. Therefore, further adaptations are needed in order to obtain an edit distance algorithm suited for the encrypted domain. The basic idea of the Myers approach, i.e. calculation of the differential values between two nodes in the edit distance determination context as depicted in Fig.2, is however maintained.

The edit distance calculation algorithm of the present invention basically comprises three parts : an equality checking phase, a main phase and then a postprocessing phase. In the equality checking phase character equality between the input strings is determined. The equality checking is in advantageous embodiments of the edit distance calculation method performed using the innovative approach based on a difference calculation as set out above. In other embodiments the equality checking is performed according to a method as already known in the art. Some examples have been briefly discussed above.

The Myers approach is designed for CPU-optimised operations, such as Boolean operations and additions, by using bitslicing. This makes operations very efficient on CPU, but they do not necessarily translate to efficient operations in the TFHE domain.

In the present invention an optimisation for FHE is performed in two steps. First, small multivalue operands, typically in the range {-1, 0, 1} are used instead of binary values in Myers. Such operands can typically be stored in a single ciphertext. For example, the trinary $\Delta h_{in}$ and $\Delta v_{in}$ operators are represented in one operand instead of splitting into binary positive and negative parts as in Myers. This limits the number of inputs and outputs that need to be handled and is efficient, due to the native multivalue operations in TFHE.

Secondly, the cell equations are rewritten to allow the calculations to be performed in only 1 bootstrap operation. This means that $\Delta v_{in}$, $\Delta h_{in}$, and eq are given as inputs to the PBS, and $\Delta v_{out}$, $\Delta h_{out}$ are extracted as the outputs. To achieve this, two optimisation techniques have been developed. First, the PBS has to be optimised to perform a lookup that is relevant for both the outputs $\Delta v_{out}$, $\Delta h_{out}$. Secondly, by carefully manipulating the PBS function, this lookup operation can still be performed in 1 PBS. For standard Levenshtein distance calculations, this calculation can be performed with 1 PBS per cell, compared to 14 PBS in the standard Myers approach or 28 PBS for Wagner-Fisher .

The algorithm calculates two output values $\Delta v_{out}$ and $\Delta h_{out}$ for each cell as shown in Fig.2. The formulas to compute $\Delta v_{out}$, $\Delta h_{out}$ are as follows :

$$\Delta v_{out} = \min \begin{pmatrix} 1, \\ \Delta v_{in} + 1 - \Delta h_{in}, \\ 1 - eq - \Delta h_{in} \end{pmatrix}$$

$$\Delta h_{out} = \min \begin{pmatrix} 1, \\ 1 + \Delta h_{in} - \Delta v_{in}, \\ 1 - eq - \Delta v_{in} \end{pmatrix} \qquad (6)$$

The first optimisation is to rewrite the equations so that they have a similar non-linear operation. Both equations can be rewritten as :

$$\Delta v_{out} = \min(-eq, \Delta v_{in}, \Delta h_{in}) + (1 - \Delta h_{in})$$
$$\Delta h_{out} = \min(-eq, \Delta v_{in}, \Delta h_{in}) + (1 - \Delta v_{in}). \qquad (7)$$

In this form, one can focus on min(-EQ, $\Delta v_{in}$, $\Delta h_{in}$) in the PBS, and perform the (1 - $\Delta h_{in}$) operations using linear computations without bootstrapping at low cost.

In the case of standard Levenshtein $\Delta h_{in}$ and $\Delta v_{in}$ have a value equal to -1, 0 or 1 and the variable EQ takes a value equal to 0 or 1. This entails a $3 \times 3 \times 2$=18-entry lookup table for the min operation, while there is only a 16-entry lookup table available. At this point it is important to note the negacyclic nature of the TFHE-PBS lookup. In TFHE with a 4 bit message (and carry), one can construct any lookup table of 16 values (values 0 to 15). Lookups at values 16 to 31 result in the negated value of the corresponding value at position x - 16. This means that if a zero lookup can be placed at position 0, and the value at position 16 is also 0, the lookup table can essentially be extended with 1 extra value. This can be done as long as the $x^{th}$ and $(x + 16)^{th}$ value are both 0.

Rewriting the formulas for $\Delta v_{out}$ and $\Delta h_{out}$ as

$$\Delta v_{out} = \{1 + \min(-eq, \Delta v_{in}, \Delta h_{in})\} - \Delta h_{in}$$
$$\Delta h_{out} = \{1 + \min(-eq, \Delta v_{in}, \Delta h_{in})\} - \Delta v_{in}, \qquad (8)$$

the function between brackets returns mostly zeros during the programmable bootstrap. This shared value is denoted M, or $M_{ij}$ indicating the M value in the cell at location i, j. Combining this with the following key for the PBS lookup:

$$(\Delta v_{in} + 1) + 3 \cdot (1 + \Delta h_{in}) + 9 \cdot eq \qquad (9)$$

results in a lookup table of 18 values, which starts and ends with two zeros. This allows fitting this lookup table into a 16-value TFHE lookup table, as detailed in Table 2. In summary, a shared function is computed using one or more programmable bootstraps, and the shared result of that function is used to compute both outputs $\Delta v_{out}$ and $\Delta h_{out}$.

Table 2

| x | Output | x | Output | x | Output | x | Output |
|---|---|---|---|---|---|---|---|
| 0 (0 0000) | 0 | 8 (0 1000) | 0 | 16 (**1** 0000) | 0 | 24 (**1** 1000) | 0 |
| 1 (0 0001) | 0 | 9 (0 1001) | 0 | 17 (**1** 0001) | 0 | 25 (**1** 1001) | 0 |
| 2 (0 0010) | 0 | 10 (01010) | 0 | 18 (**1** 0010) | 0 | 26 (**1** 1010) | 0 |

(continued)

| x | Output | x | Output | x | Output | x | Output |
|---|---|---|---|---|---|---|---|
| 3 (0 0011) | 1 | 11 (0 1011) | 0 | 19 (**1** 0011) | 15 | 27 (**1** 1011) | 0 |
| 4 (0 0100) | 1 | 12 (01100) | 0 | 20 (**1** 0100) | 15 | 28 (**1** 1100) | 0 |
| 5 (0 0101) | 0 | 13 (0 1101) | 0 | 21 (**1** 0101) | 0 | 29 (**1** 1101) | 0 |
| 6 (0 0110) | 1 | 14 (01110) | 0 | 22 (**1** 0110) | 15 | 30 (**1** 1110) | 0 |
| 7 (0 0111) | 1 | 15 (01111) | 0 | 23 (**1** 0111) | 15 | 31 (**1** 1111) | 0 |

In equation (9) the outcome of the equality eq is multiplied with 9 before being summed with the other delta terms. Therefore, it is possible to adapt the last lookup table of the equality calculation to map to a 9 instead of a 1 in equation (2). This yields us a small speedup, since a scalar multiplication is avoided. It is also beneficial in reducing the noise buildup in the ciphertexts.

The above procedure to calculate the $\Delta v$ and $\Delta h$ for each cell in the D-matrix is applied iteratively, starting from the first character of each string to be checked, and extending the length of the substrings considered throughout the calculation. On the boundaries, when $\Delta h_{in}$ and $\Delta v_{in}$ are not available, one uses the worst-case value of $\Delta v$ and $\Delta h$, which is typically 1. Throughout the computations, the edit distance between the substrings considered can be retrieved by determining a path from the first cell to the relevant cell and adding all differential values $\Delta v$ and $\Delta h$ on this path. As such, one is essentially calculating the edit distance between the full strings by building up the edit distances of increasingly larger substrings.

An example of the edit distance calculation between 'kit' and 'sit' is given in Fig.3. Looking at the first cell, one has to calculate the equations from equation (8). In this cell, eq is equal to 0 since S and K are different. The $\Delta v_{in}$ and $\Delta h_{in}$ values are on the boundary and thus not available, thus they get the value +1. The result of the calculation is $\Delta v_{out}$ and $\Delta h_{out}$ in this case equals 0 for both. Moving to the next cell on the right, one has input $\Delta h_{in}=1$ and $\Delta v_{in}=0$, and eq = 0 since S and K are different, which means the output values are $\Delta v_{out}=0$ and $\Delta h_{out}=+1$. This calculation can be carried out for each cell in the grid to end up with the values depicted in Fig.3. In the end, the edit distance is given by following a path through the grid from the top left to the bottom right and summing the $\Delta v$ and $\Delta h$ values on the path. The edit distance between substrings is similarly the sum of the $\Delta v$ and $\Delta h$ values on path from the top left to the relevant cell.

When calculating the D-matrix (or equivalently the horizontal and vertical differences $\Delta h$ and $\Delta v$), there are certain cells that never impact the end result, and as such do not need to be computed. This can be seen in the following way. First, the maximum value of the Levenshtein distance is limited. In the most extreme case, the size is max(m,n), meaning that each character of the longest string needs to be substituted. Secondly, determining the Levenshtein distance can be compared to finding the shortest path in the D-matrix, with the cost of each step equal to the costs given by Equation (1). Steps in horizontal or vertical direction always have a cost of 1, while the diagonal direction cost depends on the eq value. This means that the path through the right-upper cell in the D-matrix has a minimal cost of m + n (m vertical steps and n horizontal steps), which is higher than the maximum Levenshtein distance. From these two facts, it can be concluded that some cells will never be relevant for the end result. Without loss of generalisation, a case where n = m is considered. A cell that is k steps away from the diagonal, has a minimum path value of 2 · k, due to k horizontal steps and k vertical steps. This means that cells that are more than [k/2] steps away from the diagonal do not need to be calculated and can be skipped, while still obtaining an exact result.

In a more extreme situation, one can compute approximate Levenshtein distances, where the result is accurate up to a Levenshtein distance of l, but for larger Levenshtein distances the output might be wrong (i.e., the output might be larger than expected). This is useful when performing a threshold comparison where one wants to determine if two strings are approximately equal, in which case one only has to compute cells that are within $\lceil l/2 \rceil$ of the diagonal.

It was already mentioned that in weighted distance cases the cost of an operation can take different values. One then has weighted values for the eq input. For example, one can have an eq operation with a cost 1 for vowel-vowel substitution, while other substitutions have a cost equal to 2. In such case the $\Delta v$ and $\Delta h$ variables have possible values {-2, -1, 0, 1, 2}, making the one PBS-per-cell lookup as discussed above impossible.

This can be avoided by calculating min(min(-eq, $\Delta v_{in}$),$\Delta h_{in}$) where each min operation is performed as one PBS lookup. For the first iteration one has a three-value input (eq) and a five-value input $\Delta v_{in}$, for a total of 15 input values. The result has possible values {-2, -1, 0}, which means there are again 15 input values in the second min operation. To be more precise, in this case the key ($\Delta v_{in}$+2) + 5·eq is chosen to perform the first lookup table $\mu$ = min(-eq, $\Delta v_{in}$), and the key ($\Delta h_{in}$+2)+5·$\mu$ for the second lookup table M = min($\mu$,$\Delta h_{in}$). Similarly as before with the 9 · eq in equation (9), 5 · eq can be computed in the PBS lookup as $eq_5$ = enc(5·eq) by adapting the relevant lookup table, thus avoiding the multiplication with a factor 5. A similar technique can be used for 5·$\mu$ as $\mu_5$ = enc(5·$\mu$).

In general, one can have different edit distance scenarios with, for example, different weights, in which case one can use techniques similar to those explained above to compute a cell of the edit distance as efficient as possible. First, one can encrypt the differential values in the cell and the eq operator in one ciphertext each for efficiency reasons. Secondly, one can combine the calculation for $\Delta v_{out}$ and $\Delta h_{out}$ so that the nonlinear terms are computed in the same PBS operations. Finally, one can, if possible, combine multiple operations in a lookup (as in equation (7)) to reduce the number of PBS performed.

Another generalisation is to extend the supported edit distance measures. Above the calculations for the Levenshtein edit distance were detailed, which supports the operations 'insertion', 'deletion' and 'substitution' as mentioned in the introduction. There are other edit distances that support another set of operations, for example that include the 'transposition' operation, where two adjacent characters swap places. In this case one can use the same techniques to perform an optimal edit distance calculation: first, multivalue differential encodings, second, combining the calculations for $\Delta v_{out}$ and $\Delta h_{out}$ and finally, combining multiple operations in the same PBS operation. The difference is that in this case there could be more than two $\Delta v$ and $\Delta h$ inputs needed to compute the cell outputs $\Delta v_{out}$ and $\Delta h_{out}$.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Method for performing an equality checking of a first character and a second character in a cryptographic application wherein a programmable bootstrapping operation is used, at least one of said first and said second character being encrypted and, hence, being in the encrypted domain, the method comprising:

   - checking the equality of said first character with said second character, by determining a difference between said characters in said encrypted domain, and
   - using said difference as input for a lookup table operation through a programmable bootstrap operation, said lookup table yielding a first predetermined value if said difference equals zero and a second predetermined value different from said first predetermined value, so obtaining an equality result for the pair of characters formed by said first and said second character.

2. Method for performing said equality checking as in claim 1, wherein said first character and said second character are each represented as a plurality of chunks, and said equality checking is performed on a chunk-by-chunk basis and a lookup table result for a second or further chunk of said pluralities of chunks is determined based on a difference between corresponding current chunks and on a lookup table result for the preceding chunk, and wherein a lookup table result for the last chunk yields said equality result for said pair of characters.

3. Method for performing as in claim 1 or 2, wherein the steps of equality checking and using said difference are repeated for a plurality of pairs of characters, with said first character in said pair belonging to a first string of characters and said second character in said pair to a second string of characters.

4. Method for performing as in claim 3, wherein said first string is encrypted and said second string is unencrypted, whereby for each character of said first string an equality result is precalculated for at least a subset of possible characters of said second string and stored in a table.

5. Method for performing as in claim 3, wherein both said first and said second string are encrypted.

6. Method for performing as in any of the previous claims, whereby the output of the equality checking returns zero in case a logic zero is represented, and an integer value different from zero or one, in case a logic one is represented.

7. Method for performing as in any of the previous claims, wherein said cryptographic application is a torus fully homomorphic encryption scheme.

8. Method for calculating an edit distance between a first string and a second string of characters in a programmable bootstrapping operation of a cryptographic application, wherein the method as in any of claims 1 to 7 is applied to check the equality of a character of said first string with a character of said second string.

9. Method for calculating an edit distance as in claim 8, wherein said edit distance is calculated using one or more programmable bootstrap operations and by performing in an iterative way intermediate edit distance calculations starting from an intermediate edit distance calculation for first and second substrings of said first and second string, respectively, thereby using in each iteration a corresponding result of said equality checking, and incrementing in each iteration the size of one or both of said first and second substring until said first and second substring equal said first and second string, respectively.

10. Method for calculating an edit distance as in claim 9, wherein results of said intermediate edit distance calculations on said first and second substrings are stored in differential encoding values indicating a difference in edit distance between current first and second substrings and previous first and second substrings, and wherein after the last iteration at least a subset of differential encoding values are combined to obtain a resulting edit distance.

11. Method for calculating an edit distance as in claim 10, where said differential encoding values are each stored in a single ciphertext.

12. Method for calculating an edit distance as in claim 10 or 11, wherein multiple of said differential encoding values for said first and second substring are calculated based on a shared result of said one or more programmable bootstrapping operations.

13. Method for calculating an edit distance as in any of claims 8 to 12, wherein said one or more programmable bootstrapping operations apply a negacyclic lookup table on intermediate values computed at least partly based on said differential encoding values, said negacyclic lookup table being periodic with a given period, whereby in the second half of said given period of said lookup table values are attributed that are the negative of the values attributed in the first half of said given period.

14. Method for calculating an edit distance as in claim 13, wherein said differential encoding values for said first and second substring are calculated using in said one or more programmable bootstrapping operations a function that operates on a set of possible function input values, the size of said set exceeding half the size of said given period of the lookup table, by using said negacyclic lookup table to encode said function and ensuring that the values of at the end of the function range are the negative of the values at the start

15. A program, executable on a programmable device containing instructions which, when executed, perform the method as in any of claims 1 to 14.

**Fig.1**

**Fig.2**

**Fig.3**

Europäisches
Patentamt
European
Patent Office
Office européen
des brevets

# EUROPEAN SEARCH REPORT

**Application Number**

EP 24 20 0572

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 395 226 A1 (VAULTREE LTD [IE]) 3 July 2024 (2024-07-03) | 1,3-15 | INV. H04L9/00 |
| A | * claims 1, 2, 5 * * paragraph [0015] - paragraph [0025] * ----- | 2 | |
| A | CHEON JUNG HEE ET AL: "Homomorphic Computation of Edit Distance", 5 September 2015 (2015-09-05), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 194 - 212, XP047319813, ISBN: 978-3-540-74549-5 [retrieved on 2015-09-05] * Section 2 * * Section 3 * * Section 4.1 * * Section 5.1 * ----- | 1-15 | |
| A | CHILLOTTI ILARIA ET AL: "Programmable Bootstrapping Enables Efficient Homomorphic Inference of Deep Neural Networks", 1 January 2021 (2021-01-01), SPRINGER, PAGE(S) 1 - 19, XP047600883, * Section 4 * ----- | 1-15 | **TECHNICAL FIELDS SEARCHED (IPC)** H04L |
| T | Legiest Wouter ET AL: "Leuvenshtein: Efficient FHE-based Edit Distance Computation with Single Bootstrap per Cell", , 3 January 2025 (2025-01-03), XP093247266, Retrieved from the Internet: URL:https://eprint.iacr.org/2025/012.pdf * the whole document * ----- | 1-15 | |

The present search report has been drawn up for all claims

| Place of search | Date of completion of the search | Examiner |
|---|---|---|
| Munich | 13 February 2025 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0572

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | Publication date |
|---|---|---|---|
| EP 4395226 A1 | 03-07-2024 | EP 4395226 A1<br>WO 2024218047 A1 | 03-07-2024<br>24-10-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEON et al.** Homomorphic Computation of Edit Distance. *Lecture Notes in Computer Science*, 2015, vol. 8976, 194-212

- **I. CHILLOTTI et al.** TFHE: Fast Fully Homomorphic Encryption Over the Torus. *J.Cryptol.*, 2020, vol. 33, 34-91